# EUROPEAN PATENT APPLICATION

(11) **EP 3 147 706 A1**
(43) Date of publication of application: **29.03.2017**
(21) Application number: 14894921.7
(22) Date of filing: 24.10.2014
(51) Int. Cl.: G03B 43/00

(54) **DIRT DETECTION METHOD AND DEVICE**

(30) Priority: 20.06.2014 CN 201410280959
(71) Applicant: ZTE Corporation, Shenzhen, Guangdong 518057 (CN)
(72) Inventor: ZHANG, Lian, Shenzhen Guangdong 518057 (CN)
(74) Representative: Regimbeau
(86) International application number: PCT/CN2014/089499
(87) International publication number: WO 2015/192579

(57) **Abstract**

The present disclosure provides a method and device for dirt detection. The method for dirt detection includes: periodically reading an in-focus index FV of a video shooting module of a terminal, wherein the video shooting module is in a shooting mode; determining whether there exists dirt on a camera based on values of the read FV; and transmitting a prompt information when it is determined that there exists dirt on the camera. According to the present disclosure, the problem that the dirt on the camera can not be detected in related art is solved, thus the effects of detecting the dirt on the camera, reminding the user in time and improving user's experiences can be achieved.

## Description

### ▪ TECHNICAL FIELD

The present disclosure relates to the field of communications, in particular to a method and device for dirt detection.

### BACKGROUND

Currently, terminals are increasingly improved in terms of functions, and various functions are loaded on the terminals. In order to meet people's increasing requirements, more and more terminals are configured with functions of photographing and video-shooting. Therefore, it is essential to remove dirt on a camera when people enjoy a photographing and video-shooting process. The following description is made by taking a mobile terminal as an example. In the field of mobile terminals, the function of video-shooting becomes more and more important. Since mobile terminals are portable, cameras tend to be replaced by mobile terminals for video-shooting. However, when a user takes a picture with a mobile terminal, it is inevitable to adhere dirt such as grease to lens of the camera, so that the imaging effect may be influenced in photographing. However, since the camera of the mobile terminal is very small, the dirt is hard to be found, causing the quality of photographing and video-recording being influenced. Furthermore, technologies related to dirt detection of the camera are not involved in related art.

Therefore, there exists a problem in related art that the dirt on the camera can not be detected.

### SUMMARY

The present disclosure provides a method for dirt detection and device, for solving at least the problem that the dirt on the camera can not be detected in related art.

According to one aspect of the present disclosure, a method for dirt detection is provided. The method for dirt detection includes: periodically reading an in-focus index FV of a video shooting module of a terminal, the video shooting module is in a shooting mode; determining whether there exists dirt on a camera based on values of the read FV; and transmitting a prompt information when it is determined that there exists dirt on the camera.

Optionally, the step of determining whether there exists dirt on the camera based on values of the read FV includes: comparing whether a difference between values of the read FV is less than a first preset threshold; and determining whether there exists dirt on the camera based on a result of the comparing.

Optionally, the step of determining whether there exists dirt on the camera based on the result of the comparing includes: determining that there exists dirt on the camera when the result of the comparing indicates that the difference between the values of the read FV is less than the preset threshold.

Optionally, before the step of periodically reading the in-focus index FV of the video shooting module of the terminal, the method for dirt detection further includes: receiving a preset operation instruction that is used for triggering an operation for dirt detection.

Optionally, the step of receiving the preset operation instruction includes at least one of the followings: receiving a preset unlock gesture, wherein the unlock gesture is an unlock path for triggering dirt detection; receiving an operation for shaking detection, wherein the operation for shaking detection is triggered when a speed and/or acceleration of the shaking exceed a second preset threshold.

Optionally, the prompt information includes at least one of the followings: text prompt information; voice prompt information; and picture prompt information.

According to another aspect of the present disclosure, a device for dirt detection is provided. The device for dirt detection includes: a reading module, configured to periodically read an in-focus index FV of a video shooting module of a terminal, the video shooting module is in a shooting mode; a determination module, configured to determine whether there exists dirt on a camera based on values of the read FV; and a transmission module, configured to transmit a prompt information when it is determined that there exists dirt on the camera.

Optionally, the determination module includes: a comparison unit, configured to compare whether a difference between values of the read FV is less than a first preset threshold; and a determination unit, configured to determine whether there exists dirt on the camera based on a comparison result.

Optionally, the determination unit includes: a determination subunit, configured to determine that there exists dirt on the camera when the comparison result shows that the difference between the values of the read FV is less than the preset threshold.

Optionally, the device for dirt detection further includes: a reception module, configured to receive a preset operation instruction for triggering an operation for dirt detection.

Optionally, the reception module includes at least one of the followings: a first reception unit, configured to receive a preset unlock gesture, and the unlock gesture is an unlock path for triggering dirt detection; and a second reception unit, configured to receive an operation for shaking detection, and the operation for shaking detection is triggered when a speed and/or acceleration of shaking exceed(s) a second preset threshold.

According to the present disclosure, an in-focus index FV of a video shooting module of a terminal is read periodically, where the video shooting module is in a shooting mode; it is determined whether there exists dirt on a camera based on values of the read FV; and a prompt information is transmitted when it is determined that there exists dirt on the camera. Therefore, the problem that the dirt on the camera can not be detected in related art is solved, thus the effects of detecting the dirt on the camera, reminding the user in time and improving user's experiences can be achieved.

### BRIEF DESCRIPTION OF DRAWINGS

The drawings described herein, which constitute a part of the present application, are used for providing a further understanding of the present disclosure. The schematic embodiments of the present disclosure and the description thereof are used for explaining the present disclosure instead of improperly defining the present disclosure. In the drawings:
Fig. 1 is a flow diagram showing a method for dirt detection according to the embodiments of the present disclosure;
Fig. 2 is a structural block diagram showing a device for dirt detection according to the embodiments of the present disclosure;
Fig. 3 is a structural block diagram showing a determination module 24 in a device for dirt detection according to the embodiments of the present disclosure;
Fig. 4 is a structural block diagram showing a determination unit 34 in a device for dirt detection according to the embodiments of the present disclosure;
Fig. 5 is a preferred structural block diagram showing a device for dirt detection according to the embodiments of the present disclosure;
Fig. 6 is a structural block diagram showing a reception module 52 in a device for dirt detection according to the embodiments of the present disclosure;
Fig. 7 is a schematic diagram of a flow of a method for dirt detection and alarming according to the embodiments of the present disclosure.

### DETAILED DESCRIPTION

The present disclosure will be detailed described hereinafter by reference to the drawings and in combination with the embodiments. It should be noted that under the condition of no conflict, the embodiments in the present application and features in the embodiments can be combined with each other.

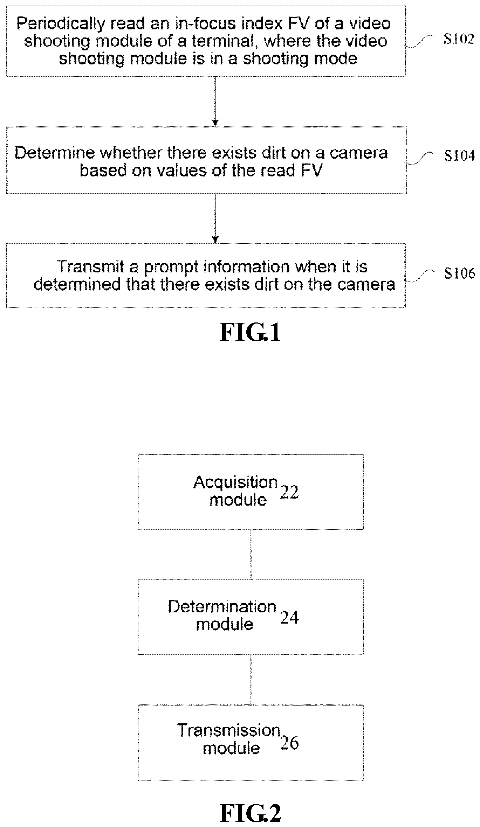

The present embodiment provides a method for dirt detection. Fig. 1 is a flow diagram showing the method for dirt detection according to the embodiment of the present disclosure. As shown in Fig. 1, the flow includes the following steps:
in step S102, periodically reading an in-focus index FV of a video shooting module of a terminal, and the video shooting module is in a shooting mode;
in step S104, determining whether there exists dirt on a camera based on values of the read FV;
in step S106, transmitting a prompt information when it is determined that there exists dirt on the camera.

Through the above steps, the in-focus index FV of the video shooting module in a shooting mode are periodically read, and it is determined whether there exists dirt on the camera by utilizing each read in-focus index, and a prompt information is transmitted when the determination result indicates that there exists dirt on the camera, thereby realizing a monitoring on the dirt on the camera. Therefore, the problem that the dirt on the camera can not be detected in related art is solved, thereby improving user's experiences.

In an alternative embodiment, the step of determining whether there exists dirt on the camera based on the values of the read FV may be implemented by determining according to the change of the values of FV. Specifically, based on a comparison result regarding whether a difference between each FV value is less than a first preset threshold, whether there exists dirt on the camera can be determined.

Optionally, when all the differences between each FV value are less than the first preset threshold, i.e., when the changes between each FV value are small, it indicates that there exists dirt on the camera. This is because the focus will be focused on a dirt point in each shooting, causing a small change of the FV values.

To be sure, other method for dirt detections can also be adopted, for example, the dirt can also be detected by a mode of area shadows. If same shadows are detected in the same position area of a plurality of continuously-shot pictures or same shadows are detected in a plurality of consecutive frames of recorded videos, it indicates that there exists dirt on the camera.

Optionally, if it is determined that there exists dirt on the camera, an alarming mechanism may be triggered automatically by the system to remind the user to remove the dirt on the camera, thereby improving the quality of shooting.

In an alternative embodiment, before periodically reading the in-focus index FV of the video shooting module of the terminal, a preset operation instruction, which is used for triggering an operation for dirt detection and the triggering of which can be conducted whenever and wherever possible, may also be received, so that the dirt detection can be completed conveniently and simply.

Particularly, receiving the preset operation instruction can include at least one of the following modes:
Mode I: a preset unlock gesture which is a unlock path for triggering the dirt detection is received. Generally, the unlock path for triggering the dirt detection is different from other unlock paths of the terminal. In addition, a path that is familiar to the user can be set as the unlock gesture for triggering the dirt detection in advance according to user's preferences.
Mode II: an operation for shaking detection is received. The operation for shaking detection is triggered when a speed of and/or acceleration of shaking exceed(s) a second preset threshold. To be sure, the operation for shaking detection can also be triggered by other modes. For example, the operation for shaking detection can be triggered when the frequency of shaking exceeds a certain value, or when times of shaking exceed a certain value, or according to a direction of shaking.

In another alternative embodiment, when it is detected that there exists dirt on the camera, a prompt information can be transmitted to the user to remind him/her. The prompt information may be text prompt information, voice prompt information, or picture prompt information, and certainly may also be a combination of various prompt information. If the terminal is provided with a flash lamp, the flash lamp may also be utilized for providing a prompt by flicking, or the prompt can also be provided by increasing the brightness of a screen of the terminal or reducing the brightness of the screen of the terminal and the like, so that the user is conveniently and quickly informed.

The present embodiment further provides a device for dirt detection, which is configured to realize the above-mentioned embodiments and the preferred implementing mode thereof. Descriptions that have been set forth are omitted. As used by the followings, a term 'module' may realize a combination of software and/or hardware with preset functions. Although a device described in the following embodiment is better realized through software, it is possible and conceived to realize through hardware or a combination of software and hardware.

Fig. 2 is a structural block diagram showing a device for dirt detection according to the embodiments of the present disclosure. As shown in Fig. 2, the device includes an acquisition module 22, a determination module 24 and a transmission module 26 which are described as follows:
The reading module 22 is configured to periodically read the in-focus index FV of the video shooting module of the terminal, where the video shooting module is in a shooting mode. The determination module 24 is connected to the reading module 22 and is configured to determine whether there exists dirt on the camera based on values of the read FV. The transmission module 26 is connected to the determination module 24 and is configured to transmit the prompt information when it is determined that there exists dirt on the camera.

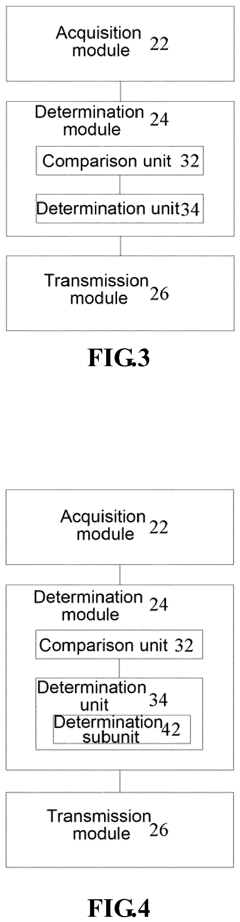

Fig. 3 is a structural block diagram of the determination module 24 in the device for dirt detection according to the embodiments of the present disclosure. As shown in Fig. 3, the determination module 24 includes a comparison unit 32 and a determination unit 34 and is described as follows.

The comparison unit 32 is configured to compare whether the difference between the values of the read FV is less than a first preset threshold. The determination unit 34 is connected to the comparison unit 32 and is configured to determine whether there exists dirt on the camera based on a comparison result of the comparison unit.

Fig. 4 is a structural block diagram of the determination unit 34 in the device for dirt detection according to the embodiments of the present disclosure. As shown in Fig. 4, the determination unit 34 includes a determination subunit 42 and is described as follows.

The determination subunit 42 is configured to determine that there exists dirt on the camera when the comparison result indicates that the difference between the values of the read FV is less than the preset threshold.

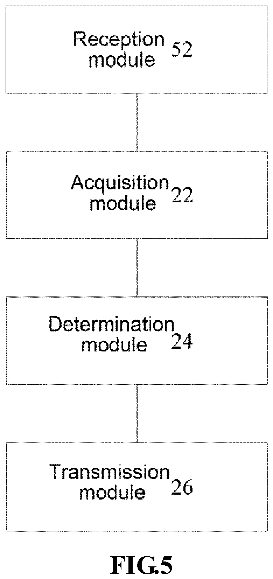

Fig. 5 is a preferred structural block diagram of a device for dirt detection according to the embodiments of the present disclosure. As shown in Fig. 5, besides all the modules shown in Fig. 2, the device further includes a reception module 52, and is described as follows.

The reception module 52 is connected to the reading module 22 and is configured to receive a preset operation instruction, and the preset operation instruction is used for triggering an operation for dirt detection.

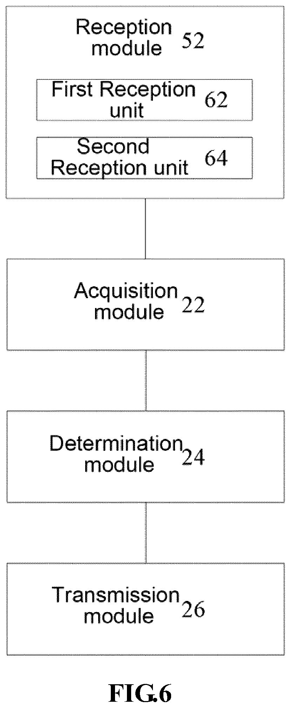

Fig. 6 is a structural block diagram of the reception module 52 in the device for dirt detection according to the embodiments of the present disclosure. As shown in Fig. 6, the reception module 52 includes at least one of the following units:
a first reception unit 62, configured to receive a preset unlock gesture which is a unlock path for triggering dirt detection; a second reception unit 64, configured to receive an operation for shaking detection, where the operation for shaking detection is triggered when a speed and/or acceleration of shaking exceed(s) a second preset threshold.

In order to solve the problem that the dirt on the camera can not be detected in the related art, the embodiments of the present disclosure provide a method for dirt detection, and description is made as follows by taking a mobile phone as an example.

In order to solve the problem that dirt such as grease is adhered on the lens of the camera, a method for detecting and alarming is provided.

The method for detecting the dirt on the camera and alarming according to the embodiments of the present disclosure includes the following modules:
A. Video shooting module
B. Dirt detection module (Same as the determination module 24)
C. Alarming module (Same as the transmission module 26)

The video shooting module A is mainly used for completing the user's requests for photographing and video-shooting and providing a detection information to the module B. The dirt detection module B is used for receiving and detecting a focusing start message transmitted from the module A; reading the FV (in-focus index, inherent dynamic focusing parameters of the video shooting module) values from the video shooting module A periodically; stopping reading values of the FV after a focusing finalization message transmitted from the module A is received; comparing values of the read FV; and transmitting an alarming request message if the change is small, indicating there exists dirt. The alarming module C is used for displaying a prompt information of 'there exists dirt on the lens, please wipe it off' to the user upon receiving the alarming request message from the module B. The functions of detecting the dirt on the camera of the mobile phone and alarming are realized based on this.

The method for detecting the dirt on the camera of the mobile phone and alarming according to the embodiments of the present disclosure includes the following steps:
in the first step, the user takes pictures by the video shooting module.
in the second step, the focusing start message is transmitted to the dirt detection module by the video shooting module.
in the third step, the FV values are read periodically from the video shooting module by the dirt detection module.
in the fourth step, the focusing finalization message is transmitted to the dirt detection module by the video shooting module.
in the fifth step, the dirt detection module stops reading the FV values and compares the read FV values. If the change is small, it indicates that there exists dirt, and an alarming request is transmitted to the alarming module.
in the sixth step, a prompt information of 'there exists dirt on the lens, please wipe it off' is displayed to the user when the alarming request is received by the alarming module.
in the seventh step, the lens are wiped by the user.

Through the above method, when there exists dirt on the lens of the camera, the user may be reminded in real time, so that the quality of the photographed picture is improved; and certainly, whether there exists dirt on the camera can also be checked by the shot videos.

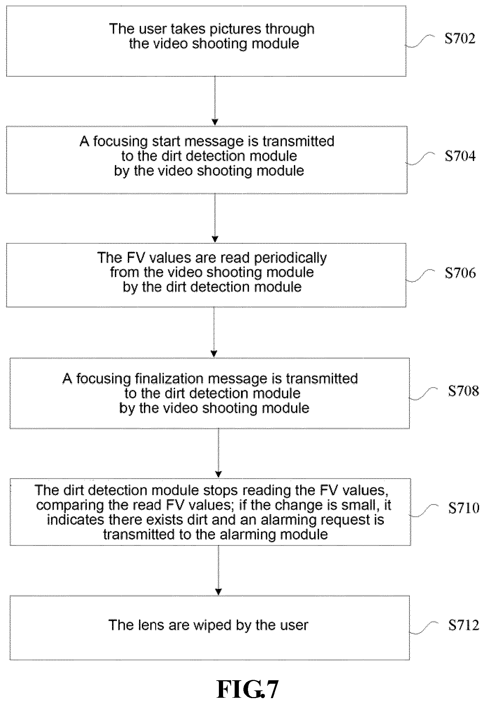

Fig. 7 is a schematic diagram of a flow of the method for detecting dirt and alarming according to the embodiments of the present disclosure. As shown in Fig. 7, the method includes the following steps:
in step S702, the user takes pictures through the video shooting module;
in step S704, a focusing start message is transmitted to the dirt detection module by the video shooting module;
in step S706, the FV values are read periodically from the video shooting module by the dirt detection module;
in step S708, a focusing finalization message is transmitted to the dirt detection module by the video shooting module;
in Step S710, stopping reading the FV values by the dirt detection module; comparing the read FV values; no treatment being made if the change is large, while an alarming request being transmitted to the alarming module if the change is small; and displaying a prompt information of 'there exists dirt on the lens, please wipe it off' to the user when the alarming request is received by the alarming module;
in step S712, the lens are wiped by the user.

So far, the whole flow is completed.

Apparently, those skilled in the art should understand that all the modules or the steps of the present disclosure may be realized by general calculating devices, and may be integrated in a single calculating device, or distributed on a network consisting of a plurality of calculating devices. Optionally, the modules or the steps of the present disclosure may be realized by program codes that can be executed by the calculating devices, so that they can be stored in a storage device and executed by the calculating devices. Moreover, under certain conditions, the shown or described steps can be executed in a sequence different from the sequence here, or are respectively made into all integrated circuit modules, or a plurality of modules or steps therein are made into a single integrated circuit module for realization. In this way, the present disclosure is not limited to any specific combination of hardware and software.

The above descriptions are merely preferred embodiments of the present disclosure, and are not used for limiting the present disclosure. For those skilled in the art, various modifications and alternations can be made to the present disclosure. Any modification, equivalent replacement and improvement made in the spirit and principle of the present disclosure should be contained within the scope of the protection of the present disclosure.

### INDUSTRIAL APPLICABILITY

As mentioned above, the method for dirt detection and device provided by the embodiments of the present disclosure have the following beneficial effects: the problem that the dirt on the camera can not be detected in related art is solved, thus the effects of detecting the dirt on the camera, reminding the user in time and improving user's experiences can be achieved.

## Claims

1. A method for dirt detection, comprising:
periodically reading an in-focus index FV of a video shooting module of a terminal, wherein the video shooting module is in a shooting mode;
determining whether there exists dirt on a camera based on values of the read FV; and
transmitting a prompt information when it is determined there exists dirt on the camera.

2. The method according to claim 1, wherein the step of determining whether there exists dirt on a camera based on values of the read FV comprises:
comparing whether a difference between the values of the read FV is less than a first preset threshold; and
determining whether there exists dirt on the camera based on a result of the comparing.

3. The method according to claim 2, wherein the step of determining whether there exists dirt on the camera based on a result of the comparing comprises:
determining that there exists dirt on the camera when the result of the comparing indicates that the difference between the values of the read FV is less than the preset threshold.

4. The method according to claim 1, wherein, before the step of periodically reading in-focus index FV of a video shooting module of a terminal, the method for dirt detection further comprises:
receiving a preset operation instruction, wherein the preset operation instruction is used for triggering an operation for dirt detection.

5. The method according to claim 4, wherein the step of receiving a preset operation instruction comprises at least one of the followings:
receiving a preset unlock gesture, wherein the unlock gesture is an unlock path for triggering dirt detection;
receiving an operation for shaking detection, wherein the operation for shaking detection is triggered when a speed and/or acceleration of shaking exceed a second preset threshold.

6. The method according to claim 1, wherein the prompt information comprises at least one of the followings:
text prompt information;
voice prompt information; and
picture prompt information.

7. A device for dirt detection, comprising:
a reading module, configured to periodically read in-focus index FV of a video shooting module of a terminal, wherein the video shooting module is in a shooting mode;
a determination module, configured to determine whether there exists dirt on a camera based on values of the read FV; and
a transmission module, configured to transmit a prompt information when it is determined that there exists dirt on the camera.

8. The device according to claim 7, wherein the determination module comprises:
a comparison unit, configured to compare whether a difference between the values of the read FV is less than a first preset threshold; and
a determination unit, configured to determine whether there exists dirt on the camera based on a comparison result of the comparison unit.

9. The device according to claim 8, wherein the determination unit comprises:
a determination subunit, configured to determine that there exists dirt on the camera when the comparison result indicates that the difference between the values of the read FV is less than the preset threshold.

10. The device according to claim 7, further comprising:
a reception module, configured to receive a preset operation instruction, wherein the preset operation instruction is used for triggering an operation for dirt detection.

11. The device according to claim 10, wherein the reception module comprises at least one of the followings:
a first reception unit, configured to receive a preset unlock gesture, wherein the unlock gesture is an unlock path for triggering dirt detection; and
a second reception unit, configured to receive an operation for shaking detection, wherein the operation for shaking detection is triggered when a speed and/or acceleration of shaking exceed a second preset threshold.
